Europäisches Patentamt

European Patent Office

Office européen des brevets

(11) Publication number: **0 217 000**
**B1**

(12) EUROPEAN PATENT SPECIFICATION

(45) Date of publication of patent specification: **23.01.91**

(51) Int. Cl.⁵: **G 01 N 35/02**

(21) Application number: **86108316.0**

(22) Date of filing: **19.06.86**

(54) Reagent containment system for a clinical analyser.

(30) Priority: **15.07.85 US 755508**

(43) Date of publication of application:
**08.04.87 Bulletin 87/15**

(45) Publication of the grant of the patent:
**23.01.91 Bulletin 91/04**

(84) Designated Contracting States:
**AT BE CH DE FR GB IT LI NL**

(56) References cited:
**EP-A-0 192 968**
**DE-A-3 134 005**
**DE-A-3 402 304**

(73) Proprietor: **ABBOTT LABORATORIES**
**14th Street and Sheridan Road North St**
**North Chicago, Illinois 60064 (US)**

(72) Inventor: **Hollar, Robert C.**
**33106 Sears Boulevard Wildwood**
**Illinois 60030 (US)**
Inventor: **Huang, Tung-Ming**
**1240 Leeds Lane Elk grove Village**
**Illinois 60007 (US)**

(74) Representative: **Modiano, Guido et al**
**MODIANO, JOSIF, PISANTY & STAUB Modiano**
**& Associati Via Meravigli, 16**
**I-20123 Milano (IT)**

**Description**

Background of the invention

The present invention is directed generally to automated or semi-automated liquid assay apparatus for conducting assays of various liquids, especially biological fluids, for substances contained therein. More specifically, the principles of this invention can be used especially advantageously as an improvement to apparatus such as the Abbott TDx® Analyzer, to more advantageously perform diagnostic assays of such biological fluids, e.g., immunoassays and nephelometric assays.

The TDx® Analyzer, commercially available from Abbott Laboratories, Abbott Park, Illinois, is a well-known, automated instrument generally used to measure analyte concentrations in biological fluids such as serum, plasma and whole blood. The TDx® system is designed for use by trained clinical laboratory technicians in hospital laboratories, in private laboratories and in physicians' offices.

The TDx® Analyzer was originally designed to operate utilizing fluorescence polarization techniques. Fluorescence polarization techniques are based on the principle that a fluorescent labelled compound in solution, when excited by plane polarized light, will emit fluorescence having a degree of polarization related to its molecular rotational relaxation time. The molecular rotational relaxation time, and hence the magnitude of the fluorescence polarization response, is directly related to the molecular size of the compound. Accordingly, when plane polarized light is passed through a solution containing a relatively high molecular weight fluorescent compound, the degree of polarization of the emitted light will in general be greater than when plane polarized light is passed through a solution containing a low molecular weight fluorescent compound.

The fluorescence polarization principle is utilized in the TDx® Analyzer by mixing a sample containing an analyte (or suspected of containing an analyte) with a "tracer", i.e., a labelled compound similar to the analyte but capable of producing a fluorescence polarization response to plane polarized light. The analyte is generally a low molecular weight compound. Antibody specific to the analyte and the tracer is also included in the mixture. The tracer and the analyte compete for a limited number of receptor binding sites on the antibody. The amount of tracer that will bind is inversely related to the concentration of analyte in the sample, because the analyte and tracer each bind to the antibody in proportion to their respective concentrations.

The fluorescence polarization response of the solution to plane polarized light will give a quantitative indication of the relative amount of free and bound tracer, because of the discrepancy in molecular size between the former and the latter. The free tracer (i.e., the tracer in solution when not complexed to the antibody) is generally a relatively small molecule compared to the tracer-antibody complex, and will tend to exhibit a shorter rotational relaxation time, such that the incident plane polarized light becomes depolarized. In contrast, plane polarized light interacting with bound tracer will tend to remain highly polarized because the large antibody-tracer rotates very little between the time that light is absorbed and emitted.

Fluorescence polarization techniques usually are applied to analytes of relatively low molecular weight. Since the tracer employed must generally resemble the analyte in order to compete effectively for antibody receptor sites, the tracer itself, in such instances, will be relatively large and will end to retain the polarization of plane polarized light. Accordingly, when this large tracer molecule is bound to the antibody, there will generally not be an appreciable difference in the fluorescence polarization response when compared with the response produced by the free tracer, so in such cases it may be necessary to consider alternative assay techniques, such as nephelometry.

Nephelometric techniques have been found to provide a means for measuring the light scatterred from a solution containing large molecules or suspended particles. In accordance with these techniques, incident light is passed through a solution, a portion of the incident light is scattered, and then the amount of scattered light is measured. These techniques have application, for example, when immunoprecipitation assays are conducted. In such assays, antibodies are raised to the analyte, often forming large three-dimensional lattices. These lattices produce an increase in the light scattering properties of the solution.

The TDx® Analyzer, for example, provides capabilities for both fluorescence polarization and nephelometric analysis, as well as for other systems of analysis. Whatever assay system is employed, in this Analyzer, as in various other instruments of the prior art, the assays have heretofore been carried out by well-known techniques which involve dispensing reagents from bulk containers located remotely from the test samples undergoing analysis, and mixing the reagents with the samples in reaction cuvettes while the latter are indexed, by means of a carrier comprising a rotating carousel or the like, from one analysis station to another. Although this methodology has proved to be generally satisfactory, it would be economical and useful, in terms of ease of analysis and speed, and advantageous in terms of reagent stability during storage prior to performance of the assays, to provide modification of the reagent and sample containment portions of such instruments which would enable substantially all of the reagents initially to be present in a single, sealed, self-contained device, in amounts which are appropriate for performing a singular, particular assay, and in close proximity to the test sample for ease of dispensing, rather than such reagents being dispensed by the instrument from bulk containers remotely located from the carrier for the samples. Also known from EP—A—192 968—priority: 27.02.85, published on 03.09.86—is a reagent container structure as defined in the precharacterizing clause of Claim 1. Accordingly, there exists

# EP 0 217 000 B1

a need for such modification and devices and assay methods which utilize such modifications, which would improve the performance of assays using such readily available analytical instrumentation.

## Summary and objects of the invention

The present invention cmprises improvements in clinical analysis apparatus of the type aforedescribed, for adapting such apparatus for performing improved assays. The apparatus of the present invention is improved by modifying the reagent containment and sample carrier means (e.g., a rotating carousel) of the apparatus in order to enable more efficient assays to be performed therewith, with concomitant greater stability for reagents and the capability of easier and faster dispensing of reagents which are employed in such assays. The invention is based upon an improvement in apparatus for performing an assay to determine the presence or ambience of a substance in a test sample. The apparatus comprises means for dispensing one or more reagents from containment means therefor into a reaction vessel and means for dispensing the sample from a sample container into said vessel for reaction with the reagents during performance of the assay. The improvement resides in the apparatus further comprising "unitized" containment means for the reagents. By "unitized" is meant that the reagent containment mean is integral and in combination with the sample container and the reaction vessel.

Accordingly, a primary object of the present invention is to provide the foregoing modifications of these aspects of a clinical analyzer, to confer the advantages described herein.

A further object of the invention is to provide such modifications with minimal changes to the hardware or construction of the analyzer.

Still another object of the invention is to provide these modifications to an automated analyzer such that the analyzer will be able to perform improved automated fluorescence polarization, nephelometric (light scattering) and other assays.

According to one aspect of the invention, these objects and others which will become apparent hereinafter, are achieved by a disposable reagent containment for use in a carousel, as defined in Claim 1.

According to another aspect of the invention, the above-mentioned objects are achieved by a carousel for liquid analysis apparatus and for holding disposable reagent containments as defined in Claim 5.

According to a further aspect of the invention, the above-mentioned objects are achieved by a liquid analysis apparatus comprising a rotatable carousel as defined in Claim 8.

Further objects and attendant advantages of the invention will be best understood by a study of the following detailed description of preferred embodiments together with the drawings.

## Brief description of the drawings

Figure 1 is a perspective view of a prior art fluorescence polarization analyzer without the improvements provided by preferred embodiments of the present invention and showing the prior art sample and reaction vessel carrier ("carousel") and bulk reagent containment portions of the analyzer mounted therein.

Figure 2 is a side elevation view of the prior art carousel of Figure 1.

Figure 3 is a bottom view of the carousel of Figure 2.

Figure 4 is a schematic plan view of the carousel of Figure 2 together with the associated fluorescence polarization optical system of the analyzer of Figure 1.

Figure 5 is a perspective view of a carousel and unitized reagent containment means according to the present invention, which can be used in place of the prior art carousel and bulk reagent container shown in Figure 1, to improve an analyzer such as that shown in Figure 1.

Figure 6 is a top elevation view of the carousel and unitized reagent containment means of Figure 5, showing these devices mounted together, as is the case during operation of the analyzer of Figure 1 using these improvements provided by the present invention.

Figure 7 is a side elevation view of the carousel and reagent containment means mounted together, as in Figurd 6.

## Detailed description of the invention

The present invention is directed to liquid analysis apparatus and instrumentation which is modified in accordance with the invention to provide the advantages hereinbefore described for assays performed with the apparatus, and for reagents used in such assays. Although the preferred embodiments of the invention described herein are specifically directed to adaptation of an automated analyzer, particularly the Abbott TDx® Analyzer, for this purpose, it is to be appreciated that the invention is not limited in its applicability to that particular instrument, but that the principles thereof can be applied to any conventional analyzer which one skilled in the art may desire to adapt for the improved performance of assays and to achieve the other advantages in accordance with the invention.

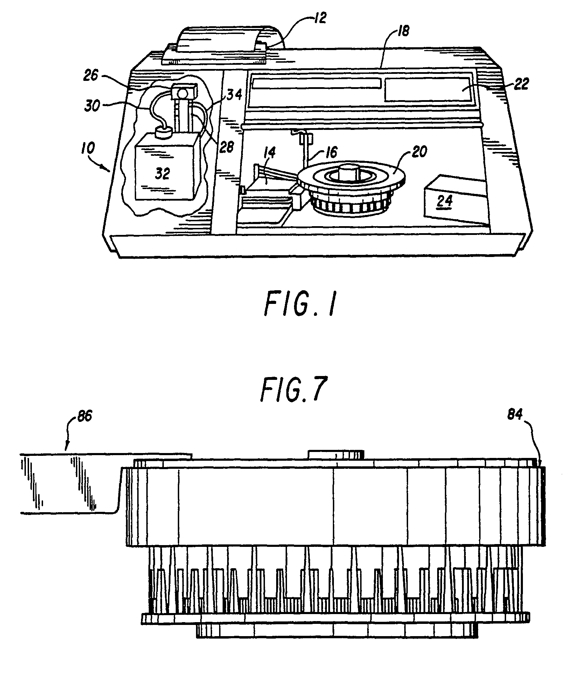

Turning now to Figures 1 through 4 of the drawings, the pre-existing Abbott TDx® Analyzer is represented generally at 10, and the components thereof which are pertinent to the description of the preferred embodiments of this invention are also shown. Major features of the Analyzer 10 comprise an output printer 12; a bulk reagent container 14; a pipetter boom assembly 16; an output display 18; a carousel 20; a control panel 22; a lamp housing 24; a diluent and sample valve block 26; diluent and sample syringes 28; inlet tubing 30; a dilution buffer container 32 and interconnecting tubing 34. The TDx®

*System Operational Manual*, is available from the Diagnostics Division of Abbott Laboratories and contains a more detailed description of the TDx® Analyzer and its operation before the addition thereto of the improvements provided by the present invention.

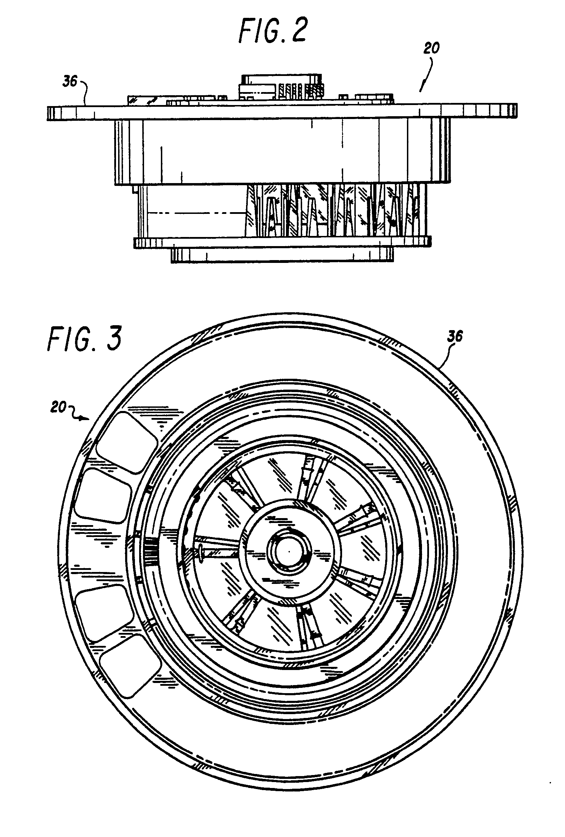

The improvements of the present invention, such as applied to the Analyzer 10, relate particularly to physical modifications of and addition of unitized reagent containment means mounted upon the carousel 20. The unmodified carousel 20 is shown in some detail in Figures 2 through 4. As described in more detail infra, the principles of the invention provide advantageously the aforementioned unitized reagent containment means for use in the performance of assays utilizing the modified version of the carousel 20.

Although not an aspect of the present invention, a general description of the use and operation of the TDx® Analyzer will now briefly be set forth. Referring to Figures 1 through 4 of the drawings, prior to the performance of a fully automated assay on the TDx® Analyzer, an outer tray 36 of the unmodified carousel 20 is loaded with sample cartridges 38 which contain sample wells 40 and sample predilution wells 42, and an inner housing 44 thereof is loaded with reaction cuvettes 44a in which the sample and reagents are reacted, and the assay is carried out and read by the Analyzer. As is well known, the loaded carousel 20 is then placed in an analysis chamber of the Analyzer, as shown at 10 in Figure 1, which is provided with a drive mechanism, such as a rack and pinion gear (not shown) for rotating the carousel 20 with respect thereto. The sample and the reagents are then pipetted by the pipetter boom assembly 16 into the reaction cuvettes 44a and the analysis is carried out. The reagents are conventionally pipetted from the bulk reagent container 14 (Figure 1), which, as shown, is located remotely from the cartridges 38 and the cuvettes 44a.

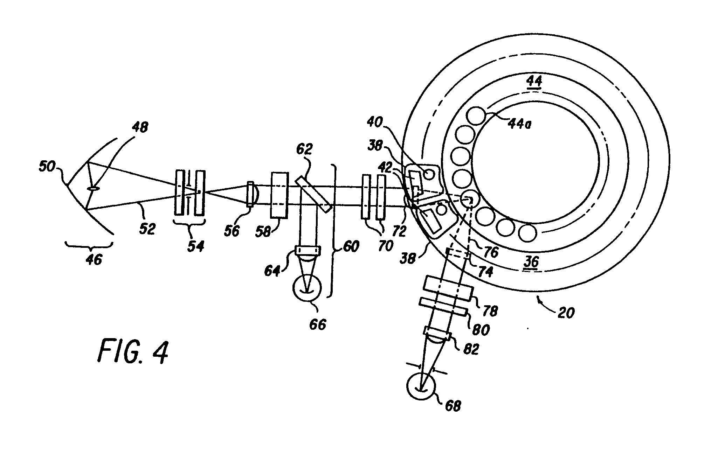

A fluorescence polarization analysis using the Analyzer 10, for example, of Figure 1, is conventionally conducted in accordance with the excitation and emission optics shown in Figure 4. A lamp 46, comprising a tungsten filament 48 and a parabolic reflector 50, emits a beam of white light 52. The light beam 52 passes through an infrared absorbing lens 54, followed by an excitation collecting lens 56 and an excitation bandpass filter 58 centered, in a typical case, on a wavelength of about 485 nanometers. A reference assembly 60, comprising a reflector 62, a reference focusing lens 64 and a reference detector 66, diverts a portion of the beam 52 for monitoring the intensity of the beam 52 as the latter is emitted from the lamp 46 (In order to correct for variations in lamp intensity, the measurements are taken as a ratio of the signal from a photomultiplier detector 68 to the signal from the reference detector 66). The remaining beam 52 passes to a liquid crystal polarizer 70 that alternately horizontally and vertically polarizes the light beam 52. Finally, an excitation condensing lens 72 focuses the light beam 52 on the center of one of the reaction cuvettes 44a, which, as is well known in the art of fluorescence polarization immunoassays, contains antiserum, tracer and sample.

The 485 nanometer light beam 52 excites fluorescein-containing compounds (i.e., bound and free tracer) contained in the reaction cuvette 44a, and these compounds respond by emitting light in a wavelength band ordinarily centered at approximately 525 nanometers. An emission collecting lens 74 captures the emitted light 76. This light 76 then passes through an emission bandpass filter 78, which permits light to pass through at about 525 nanometers. The light 76 then passes through a vertical polarizer 80, and an emission condensing lens 82 condenses the light 76, causing it to pass to the photomultiplier detector 68. The detector 68 detects the resultant signal and transmits current signals to associated, largely conventional electronics which interprets those signals as indicative of the presence and/or amount of an analyte in the sample.

As previously mentioned, the technique of fluorescence polarization, nephelometry and other methodologies for measuring the concentration of drugs or other analytes in biological fluids such as human serum or plasma, is well known. The present invention, although having broad applicability to various of these methodologies for testing of analytes in such fluids, and to both semi- or fully-automated assays, has been found to be especially advantageous when applied to improve such assays which are designed to be carried out on an analytical instrument such as the TDx® Analyzer. Accordingly, for purposes of the present disclosure, the invention will be described, in its preferred embodiments, as applied to improve assays of the prior art which can be advantageously performed on a TDx® Analyzer. A detailed description of the specific reagents and other substances which can be used in such improved assays made possible by the invention, and the procedures and techniques for performing such assays, are set forth in detail in U.S. Patent No. 4,420,568, issued December 13, 1983 and commonly assigned herewith, the disclosure of which patent is hereby incorporated herein by reference.

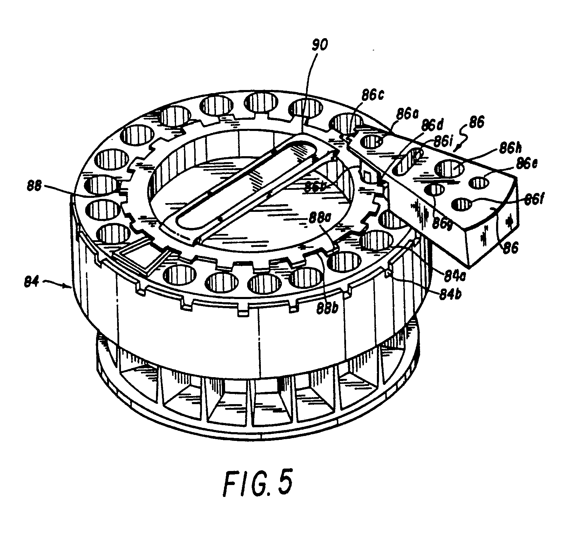

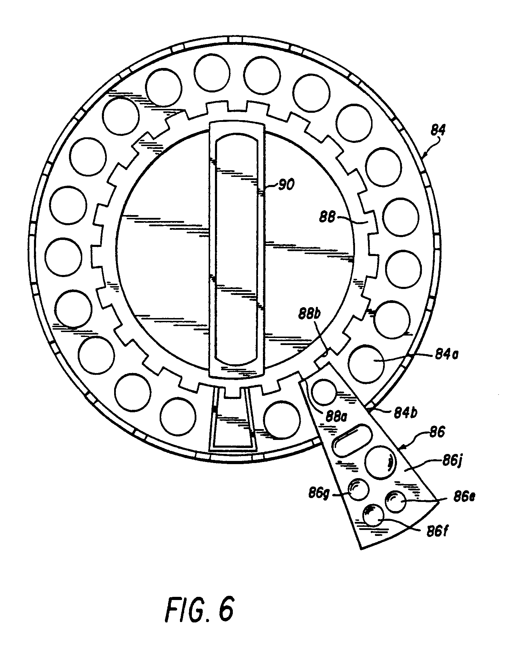

Figures 5 thcough 7 illustrate a presently preferred embodiments of the present invention. In Figure 5 is shown a modified carousel 84 (in accordance with the invention) and unitized reagent containment means 86 (also in accordance with the invention). As shown, the carousel 84 and the containment means 86, prior to use thereof in the performance of an assay in analyzer, are positioned by the operator of the analyzer such that a reaction cuvette holder 86a of the containment means 86, which has an extended portion 86b, is above and in alignment with a corresponding cuvette cavity 84a of the carousel 84. Accordingly, when the carousel 84 and containment means 86 are placed in operation in the performance of an assay on the TDx® Analyzer, means 86 fits securely upon the periphery of carousel 84, as best shown in Figures 6 and 7. It is to be appreciated that a plurality of containment means 86 can be so placed around the periphery of the carousel 84; any number of the means 86 so placed can contain reagents for different assays, or any number of means 86 so placed can contain reagents for the same assay, as desired by the operator of the analyzer.

Means 86 is mounted securely to the carousel 84 by the action of a locking ring 88, which when rotated from an unlocked position to a locked position (e.g., by turning handle 90), moves locking flanges 88a of the ring 88 into position over corresponding flanges 86c of means 86, thereby to secure means 86 to the carousel 84. Thus, when ring 88 is in its unlocked position, recesses 88b therein are located over the flanges 86c of means 86, thereby enabling the latter to be removed from or placed into the carousel 84. It is also to be noted that in the preferred embodiment shown and described, notches 84b in the carousel 84 are adapted to engage corresponding portions 86d of means 86 when means 86 is placed into the carousel 84, thereby to further secure means 86 thereupon against lateral movement and consequent instability.

The following description sets forth in greater detail the use of the aforedescribed preferred embodiments of the invention in the performance of a diagnostic assay. The specific details herein of construction and use of the preferred embodiments are intended only to disclose and to illustrate the invention, and are not to be construed as limitative thereof, any limitations being imposed only by the appended claims. For example, it will be appreciated by those skilled in the art that in addition to the particular configuration and arrangement of the individual reagent containment cavities of the unitized reagent containment means as described and shown, other configurations and arrangements can be conceived by those skilled in the art which will be fully within the concepts and teachings of this invention, and which will fully achieve the advantages of the invention. Furthermore, while the following detailed description involves primarily devices which are particularly suitable for being adapted to assays of human blood serum or plasma, it is apparent that one of ordinary skill in the art, given the teachings hereof, can apply the concepts of the invention to the assay of virtually any fluid, and in particular other biological fluids, such as whole blood, urine, spinal and amniotic fluid, and the like.

The use and operation of the TDx® analyzer are well known; full details are, for example, set forth in the "TDx® System Operation" manual, available from Abbott Laboratories, Abbott Park, Illinois. The following description relates to the major functional aspects of the TDx® Analyzer which are important to the concepts of the invention, to perform improved assays in accordance therewith. Accordingly, the following is to be read in conjunction with Figures 5 through 7 of the drawings.

Reagent/Sample Preparation (Typical Example)

Calibrators, Controls and a series of samples, e.g. human serum containing unknown levels of an analyte which it is desired to measure by means of the assay, are prepared. A centrifuge tube is designated for each sample to be tested, and placed in a suitable rack. A pipettor is filled with a precipitation reagent, designed to eliminate potentially interfering protein from the sample, and 200 microliters of the reagent are dispensed into each centrifuge tube. Then, 200 microliters of each serum sample are pipetted into its corresponding centrifuge tube containing the precipitation reagent. After pipetting of the samples, each centrifuge tube is capped and mixed on a vortex mixer for 3—5 seconds, to ensure thorough mixing. The tubes are then placed into a centrifuge head, and centrifuged for about ninety (90) seconds at $9,500 \times g$, until a clear supernatant and a hard compact pellet of denatured protein is obtained. After centrifugation is complete, each tube is uncapped and 250 microliters of the supernatant decanted into the corresponding sample well 86h of the reagent containment means 86, in preparation for performing the assay. The means 86 is then placed and locked into the carousel 84, as previously described, and the remainder of the assay procedure is performed as substantially a routine assay or calibration run would be performed on an unmodified TDx® Analyzer, with the reagents for the assay being pipetted from the cavities 86e, 86f, or 86g, rather than from the bulk reagent container 14 (Figure 1). In this regard, reference is made to the "Procedures for Operation" section of the "TDx® System Operation" manual, previously described, for further details of the protocol used. The following is a description of the major aspects of the performance of the assay.

Assay operation

All assay steps are controlled by the microprocessor and protocols programmed into the software of the TDx® Analyzer. Preferably, a specific pattern on a barcode label on the means 86 is scanned by a barcode reader and the corresponding procotol for a particular assay is retrieved from the computer memory of the Analyzer. Each protocol contains detailed instructions for movement of pipetting syringes of the Analyzer which determines the volume of sample and the procedure steps for dispensing the reagents from their individual cavities in the means 86 in the pipetting steps, instructions for movement of a boom arm containing an aspirating probe, and instructions for movement of the rotating carousel 84 containing the reaction cuvettes. In addition, the protocol contains calibrator concentrations used for a calibration curve in order to assure accuracy of the assay. The carousel 84 itself has unique identification means, such as a barcode, and a set of instructions in the protocol corresponds thereto which operate, e.g., stepper motors directed by an internal computer of the analyzer to move the carousel 84, and the syringes and boom arm relative thereto and to the means 86. A light beam focused on the carousel and controlled by the computer is used to monitor the number and placement of reaction cuvettes as the carousel rotates past the beam. Two electrodes attached near the end of the probe serve as a liquid level sensor which determines the presence of a liquid by electrical conductivity, thereby minimizing penetration of the probe into the samples and reagent cavities to aspirate or dispense.

During performance of an assay, the TDx® Analyzer automatically pipettes reagents and test samples

5

while simultaneously pipetting dilution buffer, then dispenses both into the reaction cuvette positioned in the holder 86a of the means 86 which has been placed into the carousel 84. Two pipetting syringes are driven down and the sample or reagent is aspirated at the same time the buffer is being drawn. When both syringes have been filled with the correct volumes, a boom arm moves the probe to the reaction cuvette, and the syringes are driven up, expelling their volumes. The liquids are dispensed at a high velocity creating sufficient turbulence for complete mixing.

Pipetting operations are performed with a dual syringe pump in conjunction with a boom assembly. A 250 microliter syringe is used to aspirate the sample and reagent, and a 2500 microliter syringe dispenses dilution buffer. The syringes are driven by two stepper motors which are computer-controlled for precise, pipetting as determined by the assay parameters; further control of reagent dispensing is achieved in accordance with the invention because the cavities 86e, 86f and 86g contain "unit dose" amounts of reagents; that is, only amounts of each reagent necessary to perform the assay in question, without substantial excess.

In addition, it is to appreciated that the containment means 86, preferably, is tightly covered and sealed over its top surface 86j by a substantially gas and liquid impermeable material, such as aluminum foil or plastic (not shown), the pipetting syringes, during the assay, when aspirating reagents from the means 86, thus first must pierce the covering material, prior to entering the cavities to aspirate the reagents. It is further to be appreciated that the "unit dose" format of the reagents and the covering thereof offer particular advantages in terms of reagent stability when the containment means 86 is stored for periods of time perior to use thereof to perform an assay.

The boom assembly consists of an arm which moves vertically and horizontally, tubing which is integral with the probe and liquid level sensor, and a separate unique identification means, such as a barcode reader, which moves horizontally with the boom arm. For aspiration of samples or reagents, the boom arm moves in a horizontal arc until the probe is positioned over the proper reagent cavity or well of the means 86. The probe is then moved vertically until the tip comes in contact with the liquid as the sample is aspirated. Upon completion of the aspiration, the boom moves up and horizontally, to position the probe over the dilution well or the cuvette. Coordinated rotation of the carousel occurs to bring a particular reaction cuvette into the correct position for receipt of dispersed liquid.

The dilution buffer rests on a platform (see Figure 1) controlled by a microswitch which signals when the buffer is empty. Teflon tubing connects the buffer bottle to a valve block, liquid heater and boom arm. An integral valve directs the flow of liquids in and out of the syringe and tubing.

Some biological fluids, such as patient blood sera, evidence substantial background fluorescence which must be taken into consideration in order to obtain an accurate measurement of the analyte level in the sample. In the TDx® Analyzer, a sample blank for each sample, calibrator or control is automatically made and read before a fluorescent tracer is added to the reaction mixture in each cuvette. To obtain an indication of the true background fluorescence present in the final sample, the mixture on the first reading must be at the final diluted concentration. This is accomplished by adding half the sample volume to a reaction mixture representing half the final reaction mixture. The blank mixtures are measured by the fluorescence detector and the intensities are stored in the computer memory of the instrument.

After the remaining reagents and the rest of the sample are added and incubated, the final reading is made. The blank intensities are subtracted from the final reaction mixture intensities before polarization values are automatically calculated by the computer of the TDx® Analyzer. The polarization equation becomes as follows:

$$p = \frac{(I_{vv}\text{final} - IVV\text{ blank}) - (I_{hv}\text{ final} - I_{hv}\text{ blank})}{(I_{vv}\text{ final} - I_{vv}\text{ blank}) + (I_{hv}\text{ final} - I_{hv}\text{ blank})}$$

The net and blank intensity for each cuvette is also calculated and printed, using the equation

$$I_{(\text{Net or Blk})} = 2\ I_{hv} + I_{vv}$$

As has been noted above, an important objective of the present invention is to modify the above-described prior art automated assay system (and other automated or semi-automated assay systems) so that assays can be conducted in accordance with the invention, without substantial alterations to the hardware of the analyzer.

The performance of an assay using a TDx® Analyzer modified in accordance with the invention has been previously described. In performance of an assay on a TDx® Analyzer which has been modified to perform assays in accordance with the improvements provided by the present invention, substantially the same procedures are followed as for conventional assays performed on an unmodified instrument, except that means 86 contains amounts of reagents, in cavities 86e, 86f and 86g (Figures 5 and 6) therein, which are only sufficient to perform *one* assay of a test sample in a reaction cuvette (not shown) which is placed in cuvette holder 86a thereof, rather than being dispensed from bulk containers. The sample well 86h and sample predilution well 86i of the means 86 are substantially the same as the corresponding wells 40 and 42 previously described of the sample cartridges 38 (Figure 4), and, during performance of an assay,

6

perform the same function. Thus, the modifications in assay procedure afforded by the present invention involve substantial improvements in pipetting of reagents from the cavities 86e, 86f and 86g during the various steps of the assay, by comparison with conventional pipetting of such reagents from the bulk reagent container 14 (Figure 1). It will be apparent that modification of the carousel 20 in accordance with the invention can easily be accomplished to produce the carousel 84 of the invention as shown and described herein; thus, in performance of assays using the modified carousel 84, the carousel 84 performs substantially as has been described, and rather than being merely a sample carrier means, serves the function of indexing the means 86 which additionally contains reagents necessary to the assay.

As is apparent from the foregoing description, the combination of the modified carousel and the unitized reagent containment means provided by the invention, and the use of these, in combination, in liquid assay apparatus, provides the particular advantages of both enhanced reagent stability ("shelf-life"), because the reagents are present in a "unit-dose" format, and, because of the close proximity of the reagents to the sample and reaction vessel during the assay, enables more efficient, improved assays to be performed upon the apparatus. However, it is to be understood that the foregoing detailed description is to be considered as illustrative rather than limiting, since many variations within the scope of the invention which will fully achieve these and other advantages of the invention will be apparent to one of ordinary skill in the art. Accordingly, it is intended that the appended claims be construed solely to define the scope of the invention.

## Claims

1. A disposable reagent containment for use in a carousel (84) for liquid analysis apparatus, with multiple cuvettes characterized in that it comprises:

an inner member adapted to overlay a portion of the carousel (84), said inner member having an opening and a downwardly depending cylindrical member (86b) adjacent said opening, said cylindrical member (86b) being adapted for holding one of the cuvettes in the carousel (84);

at least one locking flange (86c) extending from said inner member for engaging rotatable locking means (88, 88a, 88b) of the carousel;

portions (86d) of said inner member (86a); adapted to be engaged by notches (84b) of the carousel (84); and

an outer member having a plurality of recesses (86e—86i) therein adapted to hold reagents, samples and the like.

2. A containment according to Claim 1 wherein said flanges (86c) project horizontally from said inner member (86a).

3. A containment according to Claim 1 wherein said outer member includes a plurality of recesses for reagents (86e, 86f, 86g), a sample recess (86h), and a predilution well (86i).

4. A containment according to Claims 1, 2 or 3 wherein said containment (86) is wedge-shaped in such a manner that a plurality of said containments (86) can be assembled side-to-side in a circular pattern.

5. A carousel for liquid analysis apparatus and for holding disposable reagent containments (86), comprising:

a plurality of cuvette cavities (84a) disposed in a circular pattern around a central axis, characterized in that the carousel further comprises:

rotatable locking means (88, 88a, 88b) disposed annularly around said central axis inwardly of said cuvette cavities (84a), said locking means (88, 88a, 88b) having a plurality of alternating recesses (88b) and locking flanges (88a) around its periphery,

whereby for insertion of a reagent containment (86) into said carousel (84), said locking means (88, 88a) can be rotated so that said recesses (88b) radially align with said cuvette cavities (84a) to allow said containment (86) to be mounted on said carousel (84); and upon mounting said containment (86), said containment (86) can be locked to said carousel (84) by rotating said locking means (88, 88a, 88b) so that said locking flanges (88a) radially align with said cuvette cavities (84a) and overlay a portion (86c) of said containment (86), and

support means (84b) provided in the outer periphery of said carousel outward said cuvette cavity (84a) and said rotatable locking means, said suport means (84b) being adapted to receive corresponding portions (86d) of said containment (86).

6. A carousel according to Claim 5 wherein said support means consists of a plurality of upwardly opening notches (84b) are provided in the outer periphery of said carousel (84) outwardly of said cuvette cavities (84a) and said rotatable locking means (88, 88a, 88b), said notches (84b) being adapted to receive portions (86d) of a disposable reagent containment (86) when said containment (86) is mounted on said carousel (84).

7. A carousel according to Claim 6 or 7 wherein a pair of notches (84b) are provided on the carousel (84) for each cuvette cavity (84a).

8. A liquid analysis apparatus comprising a rotatable carousel (84) according to Claim 5 and at least one disposable reagent containment (86) according to Claim 1 removably mounted thereon, said disposable reagent containment (86) having adjacent an inner end a depending cylindrical member (86b) inserted into one of said cuvette cavities (84a) provided in said rotatably tray of said carousel (84), and said containments (86) each having an outer portion provided with a plurality of open-topped recesses (86e—86i) adapted to hold reagents and a sample to be tested.

9. Apparatus according to Claim 8, characterized in that said depending cylindrical member (86b) is open at both its upper and lower ends.

10. Apparatus according to Claim 8, characterized in that it comprises a plurality of upwardly open notches (84b) provided in an outer periphery of said tray outwardly of said cuvette cavities (84a), and in that said containments each have corresponding portions (86d) disposed radially outwardly of said cylindrical member (86b) and adapted to be received in said peripheral notches (84b) provided on said cuvette tray.

11. Apparatus according to Claim 8 and 10 wherein said carousel (84) is provided with a generally circular locking member (88) which is co-axially rotatable relative to said carousel tray and which is spaced thereabove the periphery of said locking member (88) being provided with an alternating series of recesses (88b) and locking flanges (88a) whereby, in one rotative position of said locking member (88), said recesses (88b) are aligned with said cuvette cavities (84a) to permit insertion of said cylindrical members (86b) of said containments (86) into said cavities (84a) with said portions (86d) of said containments (86) being receivable in said peripheral notches (84b) on said carousel tray when said containments (86) are mounted on said carousel (84) and whereby in a second angularly displaced rotative position of said locking member (88) said locking flanges (88a) overlay said inwardly projecting flange means (86c) on said inner ends of said containment (86) whereby to lock said containment (86) on said carousel tray.

12. Apparatus according to Claim 11 wherein two upwardly opening notches (84b) on the periphery of said carousel tray are provided for each one of said cuvette cavities (84a) and wherein each containment (86) is provided with two of said inwardly projecting flanges (86c) for engagement in a pair of said tray notches (84b).

13. Apparatus according to Claim 8, for use in immunoassays, characterized in that it comprises:

a locking ring (88) disposed inwardly of said cuvette cavities (84a), said locking ring (88) having a plurality of alternating recesses (88b) and locking flanges (88a), said locking ring (88) being movable between a first position wherein said recesses (88b) register with said cuvette cavities (84a), and a second position wherein said locking flanges (88a) register with said cavities (84a),

at least one cuvette being inserted into one of said cuvette cavities;

said containment (86) comprising a support member having provided thereon said plurality of recesses (86e—86i) for holding reagents and sample, said depending cylindrical member (86b) being inserted into one of said cuvette cavities (84a) and holding said cuvette, said containment (86) having flange means (86c) projecting inwardly of said carousel (84), said containment (86) having been inserted into said carousel (84) by having moved said locking ring (88) to the first position and having placed said cylindrical member (86b) into said one cuvette cavity (84a), said flange means (86c) having passed through a recess (88b) formed in said locking ring (88), said containment (86) having been locked into said carousel (84) by having moved said ring (88) to said second position wherein a locking flange (88a) of said locking ring (88) overlays said flange means (86c) of said containment (86).

14. Apparatus according to Claim 13, characterized in that said carousel (84) has a plurality of notches (84b) positioned outwardly of cuvette cavities (84a), and in that said containment (86) has portions (86d) which engage said notches (84b).

15. Apparatus according to Claim 13 or 14, characterized in that said containment (86) is wedge-shaped in such a manner that a plurality of said containments (86) can be assembled side-to-side in a circular pattern.

**Patentansprüche**

1. Wegwerf-Reagenzienbehälter zur Verwendung in einem Karussel (84) für Flüssigkeitsanalysevorrichtungen, mit einer Mehrzahl von Küvetten, dadurch gekennzeichnet, daß es aufweist:

ein inneres Element, das so ausgebildet ist, daß es einen Teil des Karusells (84) überlagert, wobei das innere Element eine Öffnung und ein nach unten abstehendes zylindrisches Element (86b) nahe der Öffnung aufweist, wobei das zylindrische Element (86b) so ausgebildet ist, daß es eine der Küvetten im Karussell (84) hält;

zumindest einen Verriegelungsflansch (86c), der sich vom inneren Element zum Eingriff mit drehbaren Verriegelungsmitteln (88, 88a, 88b) des Karussells wegerstreckt;

wobei Teile (86d) des inneren Elementes (86a) so ausgebildet sind, daß sie mit Kerben (84b) des Karussells (84) in Eingriff kommen; und

ein äußeres Element mit einer Vielzahl von Aussparungen (86e—86i), die zur Aufnahme der Reagenzien, der Proben u.dgl. ausgebildet sind.

2. Behälter nach Anspruch 1, bei welchem die Flansche (86c) sich vom inneren Element (86a) horizontal wegerstrecken.

3. Behälter nach Anspruch 1, bei welchem das äußere Element eine Vielzahl von Aussparungen für Reagenzien (86e, 86f, 86g) aufweist, eine Probenaussparung (86a) und einen Vorverdünnungsschacht (86i).

4. Behälter nach den Ansprüchen 1, 2 oder 3, bei welchem der Behälter (86) keilförmig ist, derart, daß eine Vielzahl von Behälter (86) nebeneinander in Kreisform zusammengebaut werden können.

5. Karussell für eine Flüssigkeitsanalysevorrichtung und zum Halten von Wegwerfreagenzienbehältern (86) mit:

einer Vielzahl von Küvettenhohlräumen (84a), die in Kreisform um eine zentrale Achse angeordnet sind, dadurch gekennzeichnet, daß das Karussell ferner aufweist;

drehbare Verriegelungsmittel (88, 88a, 88b), die ringförmig um die zentrale Achse einwärts der Küvettenhohlräume (84a) angeordnet sind, wobei die Verriegelungsmittel (88, 88a, 88b) um ihren Umfang eine Vielzahl von abwechselnden Aussparungen (88b) und Verriegelungsflanschen (88a) aufweisen,

wobei zum Einführen eines Reagenzienbehälters (86) in das Karussell (84) die Verriegelungsmittel (88, 88a) gedreht werden können, um die Aussparungen (88b) mit den Küvettenhohlräumen (84a) radial auszurichten, damit der Behälter (86) in das Karussell (84) eingebracht werden kann; und nach dem Einbringen des Behälters (86) dieser Behälter (86) am Karussell (84) verriegelt werden kann, indem die Verrieglungsmittel (88, 88a, 88b) gedreht werden, so daß die Verriegelungsflansche (88a) mit den Küvettenhohlräumen (84a) radial ausgerichtet werden und einen Teil (86c) des Behältnisses (86) überlagern, und

Stützmittel (84b), die im Außenumfang des Karussells außerhalb des Küvettenhohlraumes (84a) und der drehbaren Verriegelungsmittel vorgesehen sind, wobei die Stützmittel (84b) so ausgebildet sind, daß sie entsprechende Teile (86d) des Behälters (86) aufnehmen.

6. Karussell nach Anspruch 5, bei welchem die Stützmittel aus einer Vielzahl von nach oben offenen Kerben (84b) bestehen, die am Außenumfang des Karussells (84) außerhalb der Küvettenhohlräume (84a) und der drehbaren Verriegelungsmittel (88, 88a, 88b) vorgesehen sind, wobei die Kerben (84b) so ausgebildet sind, daß sie Teile (86d) eines Wegwerfreagenzienbehälters (86) aufnehmen, wenn der Behälter (86) in das Karussell (84) eingebracht ist.

7. Karussell nach Anspruch 6 oder 7, bei welchem am Karussell (84) für jeden Küvettenhohlraum (84a) ein Paar von Kerben (84b) vorgesehen ist.

8. Flüssigkeitsanalysevorrichtung mit einem drehbaren Karussel (84) nach Anspruch 5 und zumindest einem Wegwerfreagenzienbehälter (86) gemäß Anspruch 1, der in das Karussell entfernbar eingebracht ist, wobei der Wegwerfreagenzienbehälter (86) nahe einem inneren Ende ein abstehendes zylindrisches Element (86b) aufweist, das in einen der Küvettenhohlräume (84a) eingeführt ist, der im drehbaren Tisch des Karussells (84) vorgesehen ist, und daß die Behälter (86) je einen äußeren Teil aufweisen, der mit einer Vielzahl von oben offenen Aussparungen (86e—86i) versehen ist, welche Reagenzien und eine zu prüfende Probe aufnehmen können.

9. Vorrichtung nach Anspruch 8, dadurch gekennzeichnet, daß das abstehende zylindrische Element (86b) sowohl an seinem oberen als auch an seinem unteren Ende offen ist.

10. Vorrichtung nach Anspruch 8, dadurch gekennzeichnet, daß, eine Vielzahl von oben offenen Kerben (84b) an einem Außenumfang des Tisches außerhalb der Küvettenhohlräume (84a) vorgesehen ist und daß die Behälter jeweils entsprechende Teile (86d) aufweisen, die radial außerhalb des zylindrischen Elementes (86b) angeordnet und so ausgebildet sind, daß sie in den Umfangskerben (84b) am Küvettentisch aufgenommen werden.

11. Vorrichtung nach den Ansprüchen 8 und 10, bei welcher das Karussel (84) mit einem allgemein kreisförmigen Verriegelungselement (88) versehen ist, das relativ zum Karusselltisch koaxial drehbar und oberhalb desselben im Abstand angeordnet ist, wobei der Umfang des Verriegelungselementes (88) mit abwechselnden Reihen von Aussparungen (88b) und Verriegelungsflanschen (88a) versehen ist, so daß in einer Drehstellung des Verriegelungselementes (88) die Aussparungen (88b) mit den Küvettenhohlräumen (84a) ausgerichtet sind, um das Einsetzen der zylindrischen Elemente (86b) der Behälter (86) in die Hohlräume (84a) zu ermöglichen, wobei die Teile (86d) der Behälter (86) in den Umfangskerben (84d) des Karusselltisches aufgenommen werden, wenn die Behälter (86) in das Karussell (84) eingebracht sind und wobei in einer zweiten, winkelmäßig versetzten Relativstellung des Verriegelungselementes (88) die Verriegelungsflansche (88a) die nach innen ragenden Flanschmittel (86c) an den inneren Enden des Behälters (86) überlagern, um den Behälter (86) am Karusselltisch zu verriegeln.

12. Vorrichtung nach Anspruch 11, bei welcher zwei nach oben offene Kerben (84b) am Umfang des Karusselltisches für je einen der Küvettenhohlräume (84a) vorgesehen sind und wobei jeder Behälter (86) mit zwei der nach innen ragenden Flanschen (86c) zum Eingriff in ein Paar der Tischkerben (84b) asugestattet ist.

13. Vorrichtung nach Anspruch 8, zur Verwendung in Immunoassays, dadurch gekennzeichnet, daß sie aufweist:

einen Verriegelungsring (88), der einwärts der Küvettenhohlräume (84a) angeordnet ist, wobei der Verriegelungsring (88) eine Vielzahl von abwechselnden Aussparungen (88b) und Verriegelungsflanschen (88a) aufweist, wobei der Verriegelungsring (88) zwischen einer ersten Stellung, in welcher die Aussparung (88b) mit den Küvettenhohlräumen (84a) fluchten, und einer zweiten Stellung bewegbar ist, in welcher die Verriegelungsflansche (88a) mit den Hohlräumen (84a) fluchten;

wobei zumindest eine Küvette in einen der Küvettenhohlräume eingesetzt ist;

wobei der Behälter (86) ein Stützelement aufweist, auf dem die Vielzahl von Aussparungen (86e—86i) vorgesehen sind, um Reagenzien und die Probe aufzunehmen, wobei das abstehende zylindrische Element (86b) in einen der Küvettenhohlräume (84a) eingesetzt ist und die Küvette hält, wobei der Behälter (86) Flanschmittel (86) aufweist, die relativ zum Karussell (84) nach innen ragen, wobei der Behälter (86) in das

9

Karussell (84) eingesetzt worden ist, indem der Verriegelungsring (88) in die erste Position bewegt und das zylindrische Element (86b) im Küvettenhohlraum (84a) angeordnet worden ist, wobei die Flanschmittel (86c) sich durch eine Aussparung (88b) im Verriegelungsring (88) erstreckt haben, und der Behälter (86) im Karussell (84) verriegelt worden ist, indem der Ring (88) in die zweite Stellung bewegt worden ist, so daß ein Verriegelungsflansch (88a) des Verriegelungsringes (88) die Flanschmittel (86c) des Behälters (86) überlagert.

14. Vorrichtung nach Anspruch 13, dadurch gekennzeichnet, daß das Karussell (84) eine Vielzahl von Kerben (84b) aufweist, die außerhalb der Küvettenhohlräume (84a) angeordnet sind und daß der Behälter (86) Teile (86d) aufweist, welche in die Kerben (84c) eingreifen.

15. Vorrichtung nach Anspruch 13 oder 14, dadurch gekennzeichnet, daß der Behälter (86) keilförmig ist, derart, daß eine Vielzahl der Behälter (86) nebeneinander in Kreisform zusammengebaut werden können.

## Revendications

1. Organe jetable formant récipient pour réactifs destiné à être utilisé dans un carrousel (84) d'un appareil d'analyse de liquides ayant plusieurs cuvettes, caractérisé en ce qu'il comprend:

un organe interne destiné à recouvrir une partie du carrousel (84), cet organe interne ayant une ouverture et un organe cylindrique (86b) dépassant vers le bas près de cette ouverture, l'organe cylindrique (86b) étant destiné à maintenir l'une des cuvettes dans le carrousel (84),

au moins un flasque de blocage (86c) dépassant de l'organe interne et destiné à coopérer avec le dispositif rotatif de blocage (88, 88a, 88b) du carrousel,

des parties (86d) de l'organe interne (86a) étant destinées à coopérer avec des encoches (84b) du carrousel (84), et

un organe externe ayant plusieurs évidements (86e—86i) destiné à contenir des réactifs, de échantillons et analogues.

2. Organe formant récipient selon la revendication 1, dans lequel les flasques (86c) dépassent horizontalement de l'organe interne (86a).

3. Organe formant récipient selon la revendication 1, dans lequel l'organe externe comprend plusieurs évidements destinés à contenir des réactifs (86e, 86f, 86g), un évidement (86h) destiné à contenir un échantillon, et une cellule (86i) de dilution préalable.

4. Organe formant récipient selon la revendication 1, 2 ou 3, dans lequel l'organe (86) formant récipient a une forme de coin de manière que plusieurs organes (86) formant récipients puissent être placés côté à côte suivant un dessin circulaire.

5. Carrousel destiné à un appareil d'analyse de liquides et à contenir des organes jetables (86) formant récipients pour réactifs, comprenant

plusieurs cavités (84a) de cuvettes placées suivant un dessin circulaire autour d'un axe central, caractérisé en ce que le carrousel comporte en outre:

un dispositif rotatif de blocage (88, 88a 88b) placé annulairement autour de l'axe central vers l'intérieur des cavités (84a) des cuvettes, le dispositif de blocage (88, 88a, 88b) ayant plusieurs évidements (88b) et plusieurs flasques (88a) de blocage qui alternent à sa périphérie,

si bien que, lors de l'introduction d'un organe (86) formant récipient pour réactifs dans le carrousel (84), le dispositif de blocage (88, 88a) peut être tourné afin que les évidements (88b) s'alignent radialement sur les cavités (84a) des cuvettes et permettent le montage de l'organe (86) formant récipient sur le carrousel (84), et, après montage de l'organe (86) formant récipient, cet organe (86) peut être bloqué sur le carrousel (84) par rotation du dispositif de blocage (88, 88a, 88b) afin que les flasques de blocage (88a) s'alignent radialement sur les cavités (84a) des cuvettes et recouvrent une partie (86c) de l'organe formant récipient (86), et

un dispositif de support (84b) placé à la périphérie externe du carrousel à l'extérieur de la cavité (84a) de la cuvette et du dispositif rotatif de blocage, le dispositif de support (84b) étant destiné à loger les parties correspondantes (86d) de l'organe (86) formant récipient.

6. Carrousel selon la revendication 5, dans lequel le dispositif de support est formé d'encoches (84b) qui débouchent vers le haut et sont formées à la périphérie externe du carrousel (84) à l'extérieur des cavités (84a) des cuvettes et du dispositif rotatif de blocage (88, 88a, 88b), les encoches (84b) étant destinées à loger les parties (86d) d'un organe jetable (86) formant récipient pour réactifs lorsque cet organe jetable (86) est monté sur le carrousel (84).

7. Carrousel selon la revendication 6 ou 7, dans lequel deux encoches (84b) sont formées sur le carrousel (84) pour chaque cavité (84a) de cuvette.

8. Appareil d'analyse de liquides comprenant un carrousel rotatif (84) selon la revendication 5 et au moins un organe jetable (86) formant récipient pour réactifs selon la revendication 1, monté de façon amovible sur lui, l'organe jetable (86) formant récipient pour réactifs ayant, près d'une extrémité interne, un organe cylindrique (86b) qui dépasse vers le bas et qui est introduit dans l'une des cavités (84a) de cuvettes placées dans le plateau rotatif du carrousel (84), et les organes (84) formant récipients ont chacun une partie externe qui a plusieurs évidements (86e—86i) ouverts à leur partie supérieure et destinés à contenir des réactifs et un échantillon à analyser.

9. Appareil selon la revendication 8, caractérisé en ce que l'organe cylindrique (86b) qui dépasse vers le bas est ouvert à la fois à ses extrémités supérieure et inférieure.

10. Appareil selon la revendication 8, caractérisé en ce qu'il comporte plusieurs encoches (84b) qui débouchent vers le haut et qui sont formées à la périphérie externe du plateau à l'extérieur des cavités (84a) des cuvettes, et en ce que les organes formant récipients comportent chacun des parties correspondantes (86d) disposées radialement à l'extérieur de l'organe cylindrique (86b) et destinées à être logées dans les encoches périphériques (84b) formées sur le plateau des cuvettes.

11. Appareil selon les revendications 8 et 10, dans lequel le carrousel (84) a un organe (88) de blocage de forme générale circulaire qui peut tourner coaxialement par rapport au plateau du carrousel et qui est placé à une certaine distance au-dessus, la périphérie de l'organe de blocage (88) ayant des séries d'évidements (88b) et de flasques de blocage (88a) qui alternent si bien que, dans une première position de l'organe (88) de blocage en rotation, les évidements (88b) sont alignés sur les cavités (84a) des cuvettes et permettent l'introduction des organes cylindriques (86b) des organes (86) formant récipients dans les cavités (84a) alors que lesdites parties (86d) des organes (86) formant récipients peuvent se loger dans les encoches périphériques (84b) formées sur le plateau du carrousel lorsque les organes (86) formant récipients sont montés sur le carrousel (84), et si bien que, dans une seconde position en rotation, déplacée angulairement, de l'organe de blocage (88), les flasques de blocage (88a) sont placés au-dessus des flasques (86c) dépassent vers l'intérieur aux extrémités internes de l'organe (86) formant récipient, si bien que cet organe (86) formant récipient est bloqué sur le plateau du carrousel.

12. Appareil selon la revendication 11, dans lequel deux encoches (84b) débouchant vers le haut à la périphérie du plateau du carrousel sont associées à chacune des cavités (84a) des cuvettes, et dans lequel chaque organe (86) formant récipient a deux flasques (86c) dépassant vers l'intérieur et destinés à coopérer avec deux encoches (84b) du plateau.

13. Appareil selon la revendication 8, destiné à être utilisé pour des analyses immunologiques, caractérisé en ce qu'il comprend:

une bague de blocage (88) disposée vers l'intérieur des cavités (84a) des cuvettes, la bague de blocage (88) ayant plusieurs évidements (88b) et flasques de blocage (88a) qui alternent, le bague de blocage (88) étant mobile entre une première position dans laquelle les évidements (88b) sont en face des cavités (84a) des cuvettes, et une seconde position dans laquelle les flasques de blocage (88a) sont en face des cavités (84a),

au moins une cuvette étant introduite dans l'une des cavités de cuvette,

l'organe (86) formant récipient comprenant un organe de support qui a plusieures évidements (86e—86i) destinés à contenir des réactifs et un échantillon, l'organe cylindrique (86b) qui dépasse par-dessous étant introduit dans l'une des cavités (84a) de cuvette et retenant cette cuvette, l'organe (86) formant récipient ayant un flasque (86c) qui dépasse vers l'intérieur du carrousel (84), l'organe (86) formant récipient ayant été introduit dans le carrousel (84) par déplacement de la bague de blocage (88) vers la première position et par disposition de l'organe cylindrique (86b) dans la cavité (84a) de la cuvette, le flasque (86c) étant passé dans un évidement (88b) formé dans la cuvette de blocage (88), l'organe (86) formant récipient ayant été bloqué dans le carrousel (84) par déplacement de la bague (88) dans la seconde position dans laquelle un flasque de blocage (88a) de la bague de blocage (88) recouvre le flasque (86c) de l'organe (86) formant récipient.

14. Appareil selon la revendication 13, caractérisé en ce que le carrousel (84) a plusieurs encoches (84b) disposées à l'extérieur des cavités (84a) des cuvettes, et en ce que l'organe (86) formant récipient a des parties (86d) qui coopèrent avec les encoches (84b).

15. Appareil selon la revendication 13 ou 14, caractérisé en ce que l'organe (86) formant récipient a une forme de coin si bien que plusieurs organes (86) formant récipients peuvent être placés côte à côte suivant un dessin circulaire.

FIG. 1

FIG. 7

1

EP 0 217 000 B1

## FIG.2

## FIG. 3

FIG. 4

FIG.5

FIG. 6